# DEMANDE DE BREVET EUROPEEN

(11) **EP 2 933 753 A1**
(43) Date de publication de la demande: **21.10.2015**
(21) Numéro de dépôt: 14169531.2
(22) Date de dépôt: 22.05.2014
(51) Int. Cl.: G06K 9/00

(54) **Procédé et dispositif de commande d'actions réalisées par un système informatique**

(30) Priorité: 14.04.2014 EP 14164540
(71) Demandeur: Sequeris, 75116 Paris (FR)
(72) Inventeur: Philippe, Sébastien, 75116 PARIS (FR)
(74) Mandataire: Cornuejols, Georges

(57) **Abrégé**

Le procédé comporte :
- une étape (101) de mise en mémoire de correspondance entre des ensembles de formes de parties de main et des actions à commander,
et, itérativement :
- une étape (102) de capture d'une image,
- une étape (104) de recherche d'un poing ou d'une main, avec un premier mini-classifieur (en anglais « classifier ») dans l'image complète,
- au cas où un poing ou une main est détecté, une étape de définition d'une première fenêtre de recherche entourant le poing ou la main détecté et une étape de recherche, avec un deuxième mini-classifieur, d'un poing ou d'une main dans la première fenêtre,
- au cas où un poing ou une main est détecté au cours de l'étape de recherche avec le deuxième mini-classifieur, une phase de suivi comportant :
o une étape de capture d'une nouvelle image,
o une étape de définition d'une deuxième fenêtre de recherche entourant le poing ou la main détecté,
o une étape de recherche, avec un troisième mini-classifieur, du poing ou de la main détecté dans la deuxième fenêtre de recherche, et
o si le poing ou la main est détecté avec le troisième mini-classifieur, une étape de recherche avec un quatrième mini-classifieur, du poing ou de la main détecté, dans la deuxième fenêtre de recherche,

## Description

### DOMAINE TECHNIQUE DE L'INVENTION

La présente invention vise un procédé et un dispositif de commande d'actions réalisées par un système informatique, notamment par reconnaissance et de suivi d'au moins une main. Elle s'applique, notamment, au contrôle d'un ordinateur, d'une tablette ou d'un ordiphone (plus connu sous le nom de « smartphone ») sans ou en complément d'une interface homme-machine fonctionnant par contact ou au contrôle d'un périphérique, tel un téléviseur.

### ETAT DE LA TECHNIQUE

Les interfaces homme-machine utilisées pour la prise de contrôle d'un ordinateur par un utilisateur sont les souris et les claviers. Cependant, dans le cas d'une mise à disposition d'un ordinateur en public par exemple, l'utilisation intensive de ces interfaces provoque leur usure et peut devenir source de dysfonctionnements. De plus, dans de tels scénarios, des vols d'une ou plusieurs de ces interfaces peuvent limiter voire empêcher un utilisateur de se servir de l'ordinateur. Dans le cas d'un ordinateur ou d'un téléviseur à domicile, les interfaces homme-machine de contrôle (clavier, souris, télécommande) peuvent être encombrantes ou facilement perdues. Dans le cas d'interfaces sans-fil, comme un clavier sans fil, une souris sans fil ou une télécommande, l'encombrement lié aux fils disparaît, mais des contraintes d'autonomie électrique apparaissent.

Pour remédier à ces inconvénients, certaines interfaces homme-machine se basent désormais sur de la reconnaissance d'image fournie par une webcam intégrée à l'ordinateur ou au téléviseur. Dans ces systèmes, l'ordinateur ou le téléviseur reconnaît la forme de l'intégralité d'une main qu'il considère comme un curseur de souris. Cependant, de tels systèmes ne permettent pas à un utilisateur de réaliser un grand nombre de commandes de contrôle en raison du temps de calcul associé à l'analyse d'image par l'ordinateur ou le téléviseur. Pour cette raison, les mouvements d'une main recherchés pour commander une action sur l'ordinateur, par exemple, sont grossiers.

### OBJET DE L'INVENTION

La présente invention vise à remédier à tout ou partie de ces inconvénients.

A cet effet, selon un premier aspect, la présente invention vise un procédé de commande d'actions réalisées par un système informatique, par reconnaissance et de suivi d'au moins une main, qui comporte :
- une étape de mise en mémoire de correspondance entre des ensembles de formes de parties de main et des actions à commander,
et, itérativement :
- une étape de capture d'une image,
- une étape de recherche d'un poing ou d'une main, avec un premier mini-classifieur (en anglais « classifier ») dans l'image complète,
- au cas où un poing ou une main est détecté, une étape de définition d'une première fenêtre de recherche entourant le poing ou la main détecté et une étape de recherche, avec un deuxième mini-classifieur, d'un poing ou d'une main dans la première fenêtre,
- au cas où un poing ou une main est détecté au cours de l'étape de recherche avec le deuxième mini-classifieur, une phase de suivi comportant :
   o une étape de capture d'une nouvelle image,
   o une étape de définition d'une deuxième fenêtre de recherche entourant le poing ou la main détecté,
   o une étape de recherche, avec un troisième mini-classifieur, du poing ou de la main détecté dans la deuxième fenêtre de recherche, et
   o si le poing ou la main est détecté avec le troisième mini-classifieur, une étape de recherche avec un quatrième mini-classifieur, du poing ou de la main détecté, dans la deuxième fenêtre de recherche,
- si un poing ou une main est détectée avec le deuxième mini-classifieur :
   o une étape de définition d'une fenêtre de recherche d'un pouce,
   o une étape de recherche d'un pouce dans la fenêtre de recherche de pouce,
   o une étape de définition d'une fenêtre de recherche d'au moins un doigt différent du pouce,
   o une étape de recherche d'au moins un doigt différent d'un pouce dans la fenêtre de recherche de doigt différent d'un pouce,
- une étape de détermination si l'ensemble de formes détectées dans l'image correspond à une action à réaliser et, si l'ensemble de formes détectées dans l'image correspond à une action à réaliser, une étape de réalisation de ladite action.

On note que les mini-classifieurs utilisés ne sont pas limités aux formes de poings, d'une main ou de doigts d'une main mais s'étendent à des formes plus complexes. Des exemples de classifieurs sont donnés dans les documents US 2012/0274777 et US 2013/0215264.

Grâce à ces dispositions, la détection et le suivi de la main sont particulièrement rapides. Le procédé objet de la présente invention a ainsi démontré une plus grande efficacité que les procédés connus.

Dans des modes de réalisation, les premier et deuxième mini-classifieurs mettent en oeuvre des bases de données de formes de mains et/ou de poings, comportant plus de formes de mains et/ou de poings que les bases de données de formes mises en oeuvre par les troisième et quatrième mini-classifieurs.

Dans des modes de réalisation, le deuxième mini-classifieur recherche une partie de la forme de main ou de poings qui est recherchée par le premier mini-classifieur.

Grâce à chacune de ces dispositions, le procédé objet de la présente invention est encore plus efficace, en termes de capacité de détection et de consommation de ressources de calcul.

Dans des modes de réalisation, si l'ensemble de formes détectées dans l'image ne correspond pas à une action à réaliser, et si un mouvement de main ou de poing a été réalisé entre la précédente image où un poing ou une main a été détecté ou suivi et l'image courante, une étape de réalisation d'un mouvement de curseur proportionnel au mouvement détecté.

Grâce à ces dispositions, les mouvements de main qui ne correspondent pas à une action, peuvent correspondre à des déplacements de curseur.

Dans des modes de réalisation, le procédé objet de la présente invention comporte, si ni un poing, ni une main n'est détectée avec un mini-classifieur rigide :
- une étape de capture d'une deuxième image,
- une étape de création d'une troisième image représentative de la différence entre la première image et la deuxième image par calcul de la différence entre la première image et la deuxième image,
- une étape de détection de formes représentatives d'une pluralité de doigts dans la troisième image créée,
et, itérativement :
- une étape de mémorisation de la position de chaque forme détectée dans l'image créée précédente,
- une étape de capture d'une quatrième image,
- une étape de création d'une cinquième image représentative de la différence entre la deuxième image et la quatrième image par calcul de la différence entre la deuxième image et la quatrième image,
- une étape de repérage de la forme d'au moins un doigt dans la cinquième image créée en fonction d'au moins une forme détectée au cours de l'étape de détection de forme et de la position mémorisée de ladite forme dans l'image créée précédente,
- une étape de reconnaissance d'un mouvement associé à au moins une forme de doigt repérée,
- une étape de reconnaissance de la forme d'une partie d'une main et
- une étape de mise en oeuvre d'un actionneur en fonction du mouvement reconnu et de la partie de la main reconnue.

Grâce à ces dispositions, en cas de non reconnaissance d'un poing ou d'une main par les étapes caractéristiques du procédé objet de la présente invention, on met en oeuvre d'autres étapes, plus destinées à détecter un mouvement qu'une forme statique.

Dans des modes de réalisation, le procédé objet de la présente invention comporte, après l'étape de détection d'une pluralité de formes de doigt, une étape de vérification de la correspondance entre les positions relatives des formes de doigt détectées et une main humaine.

Ces modes de réalisation ont l'avantage de permettre la détection rapide d'une main en recherchant une pluralité de doigts plus rapidement reconnaissables qu'une main par un ordinateur tout en s'assurant qu'il s'agit bien d'une main et non pas de plusieurs doigts d'utilisateurs différents.

Dans des modes de réalisation, le procédé objet de la présente invention comporte, après l'étape de détection d'une pluralité de formes, une étape de définition, pour au moins une forme détectée, d'une fenêtre de recherche entourant ladite forme et excluant au moins partiellement chaque autre forme détectée et dans lequel, au cours de l'étape de repérage, seules les parties de la cinquième image dans les fenêtres de recherche définies sont utilisées.

Ces modes de réalisation permettent d'accélérer grandement le traitement des images permettant une plus grande précision dans la détection des mouvements des doigts d'un utilisateur.

On note que le nombre de doigts utilisés pour la détection de la main peut ne pas correspondre au nombre de doigts dont le mouvement est ensuite analysé. Ainsi, on dispose simultanément de la fiabilité de la détection initiale de plusieurs doigts et de la rapidité et intuitivité de la commande manuelle avec un seul doigt.

Dans des modes de réalisation, le procédé objet de la présente invention comporte, après au moins une étape de capture d'une image, une étape de changement de résolution de ladite image.

Ces modes de réalisation permettent d'augmenter la rapidité du traitement d'image en minimisant la taille de l'image à analyser pour reconnaître la forme d'un doigt, par exemple.

Dans des modes de réalisation, l'étape de création d'une troisième image et/ou l'étape de création d'une cinquième image comporte :
- une étape d'échantillonnage, dans des intervalles comportant, chacun, un nombre de lignes prédéterminé, par projection du contenu d'une pluralité de lignes de l'intervalle sur l'une des lignes dudit intervalle, pour constituer un segment horizontal,
- une étape de sélection du point central de chaque segment horizontal et
- une étape de création de segments reliant les points centraux successifs.

L'avantage de ces modes de réalisation est qu'ils permettent d'accélérer la reconnaissance d'un doigt en rendant l'image à analyser plus précise, notamment en rendant continus les traits représentatifs de contours d'un doigt et ce même si les formes détectées sont incomplètes en raison d'un manque de luminosité, par exemple.

Dans des modes de réalisation, le procédé objet de la présente invention comporte, après l'étape de détection de formes, une étape de sélection d'une zone d'intérêt de la troisième image de manière à sélectionner, pour chaque forme détectée dans la troisième image, une partie de la cinquième image autour de ladite forme.

Ces modes de réalisation ont l'avantage d'augmenter la rapidité de traitement de la cinquième image en vue de détecter le mouvement d'une forme de doigt déjà repérée.

Dans des modes de réalisation, au cours de l'étape de repérage, on repère au moins la position de la forme de l'index d'une main.

Ces modes de réalisation permettent de faciliter le repérage de la forme de d'un doigt en raison de la forme particulière de l'index d'une main. De plus, l'index est le doigt le plus utilisé pour effectuer des clics gauches de souris.

Dans des modes de réalisation, au cours de l'étape de détection de formes représentatives d'une pluralité de doigts dans la troisième image créée, on détecte au moins les formes d'un index, d'un majeur et d'un annulaire d'une même main.

L'avantage de ces modes de réalisation est qu'ils permettent d'augmenter la fiabilité de la détection car les extrémités des index, majeurs et annulaires forment généralement un triangle isocèle, de même que la jonction entre deux doigts consécutifs et les extrémités de ces doigts forment généralement un triangle dont la longueur d'un côté est comprise entre 85% et 95% d'un autre.

Dans des modes de réalisation, au cours de l'étape de reconnaissance d'un mouvement, un mouvement selon trois dimensions est reconnu.

Dans des modes de réalisation, au cours de l'étape de mise en mémoire de correspondance entre des ensembles de formes de parties de main et des actions à commander, on met en mémoire au moins une correspondance entre un ensemble de formes de parties de main et un mouvement à une action à réaliser et, au cours de l'étape de détermination si l'ensemble de formes détectées dans l'image correspond à une action à réaliser, on détermine si un mouvement détecté entre deux images captée correspond à un mouvement associé à l'ensemble de parties de main et à une action à réaliser.

On enrichit ainsi l'ensemble des correspondances permettant de déclencher des actions.

Dans des modes de réalisation, l'ouverture d'une main correspond au démarrage d'une commande sélectionnée.

Dans des modes de réalisation, l'éloignement latéral de mains vues de côté dans lesquelles le pouce rejoint les autres doigts correspond à une augmentation de taille, ou grossissement, de l'objet affiché et leur rapprochement correspond à une réduction de taille de l'objet affiché.

Dans des modes de réalisation, un poing fermé avec le pouce écarté correspond, selon son déplacement :
- à une augmentation ou une réduction, de volume sonore ou de grossissement ou
- à un recul ou une avance, dans une succession de fichiers ou parties de fichiers.

Selon un deuxième aspect, la présente invention vise un dispositif de commande d'actions réalisées par un système informatique, par reconnaissance et de suivi d'au moins une main, qui comporte :
- un moyen de mise en mémoire de correspondance entre des ensembles de formes de parties de main et des actions à commander,
- un capteur d'image et
des moyens de commande et de calcul qui, itérativement :
- commandent une capture d'une image,
- recherchent un poing ou une main, avec un premier mini-classifieur (en anglais « classifier ») dans l'image complète,
- au cas où un poing ou une main est détecté, définissent une première fenêtre de recherche entourant le poing ou la main détecté et recherchent, avec un deuxième mini-classifieur, d'un poing ou d'une main dans la première fenêtre,
- au cas où un poing ou une main est détecté au cours de la recherche avec le deuxième mini-classifieur, réalisent une phase de suivi comportant :
   o une capture d'une nouvelle image,
   o une définition d'une deuxième fenêtre de recherche entourant le poing ou la main détecté,
   o une recherche, avec un troisième mini-classifieur, du poing ou de la main détecté dans la deuxième fenêtre de recherche, et
   o si le poing ou la main est détecté avec le troisième mini-classifieur, une recherche avec un quatrième mini-classifieur, du poing ou de la main détecté, dans la deuxième fenêtre de recherche,
- si un poing ou une main est détectée avec le deuxième mini-classifieur, réalisent :
   o une définition d'une fenêtre de recherche d'un pouce,
   o une recherche d'un pouce dans la fenêtre de recherche de pouce,
   o une définition d'une fenêtre de recherche d'au moins un doigt différent du pouce,
   o une recherche d'au moins un doigt différent d'un pouce dans la fenêtre de recherche de doigt différent d'un pouce et
- déterminent si l'ensemble de formes détectées dans l'image correspond à une action à réaliser et, si l'ensemble de formes détectées dans l'image correspond à une action à réaliser, une étape de réalisation de ladite action.

Les avantages, buts et caractéristiques particulières du dispositif objet de la présente invention étant similaires à ceux du procédé objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du dispositif et du procédé de transmission d'alerte, en regard des dessins annexés, dans lesquels :
- les figures 1A à 1E représentent, sous forme d'un logigramme des étapes d'un mode de réalisation particulier du procédé objet de la présente invention,
- les figures 2A à 2E représentent, sous forme d'un logigramme, des étapes d'un mode de réalisation particulier du procédé objet de la présente invention,
- la figure 3 représente, schématiquement, un mode de réalisation particulier du dispositif objet de la présente invention,
- les figures 4 à 17 représentent des positions de mains mises en oeuvre dans des modes de réalisation particuliers du procédé objet de la présente invention,
- la figure 18 représente un résultat particulier obtenu au cours de l'étape de création d'une image par différence entre deux images,
- la figure 19 représente un échantillonnage vertical de l'image illustrée en figure 18,
- la figure 20 représente une image créée par la détermination du point central de chaque segment horizontal de la figure 19,
- la figure 21 représente une image représentative d'un doigt créée en reliant les points de la figure 20,
- les figures 22 à 24 représentent des positions de mains mises en oeuvre dans des modes de réalisation particuliers du procédé objet de la présente invention et
- les figures 25 à 30 représentent des formes de main associées à des actions particulières.

### DESCRIPTION D'EXEMPLES DE REALISATION DE L'INVENTION

On décrit, ci-dessous, différents modes de réalisation du procédé objet de la présente invention qui mettent en oeuvre des classifieurs. On rappelle ici que, en apprentissage automatique, le rôle d'un classifieur est de classer dans des groupes (des classes) les échantillons qui ont des propriétés similaires, mesurées sur des observations. Le terme de classifieur linéaire représente une famille d'algorithmes de classement statistique, qui calcule la décision par combinaison linéaire des échantillons.

Les classifieurs sont créés à partir d'une base de données qu'il faut développer et comparent des caractéristiques de l'image captée (ou d'une fenêtre de recherche qui en est extraite) avec des caractéristiques conservées en base de données. L'homme du métier doit composer ses propres classifieurs en fonction de ce qui est recherché.

Les classifieurs plus souples ont moins de base de données donc peuvent confondre plus facilement les objets. Les classifieurs plus robustes ont donc plus de base de données en référence. De plus, il est possible lors du traitement d'images de données des critères plus ou moins souples selon que l'on souhaite plus ou moins de fausses détections (qui a pour inconvénient de ne pas faire apparaître l'objet si ces critères sont trop poussés).

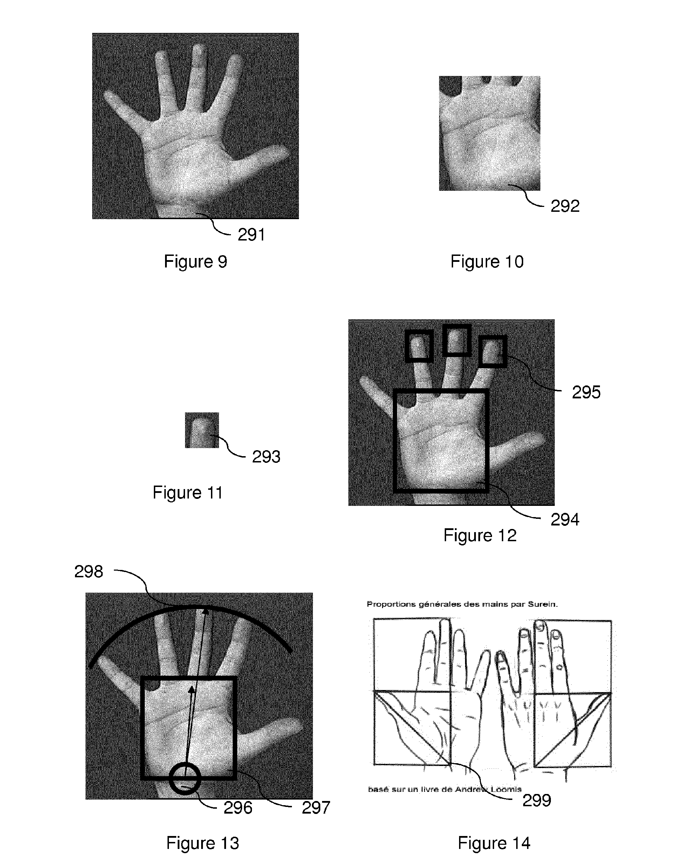

Dans les modes de réalisation décrits ci-dessous, on utilise des algorithmes simplifiés de détection et de suivi (« tracking »), plutôt qu'un seul algorithme complexe. Par exemple, plutôt que d'utiliser un classifieur qui recherche une forme 291 de main complète (figure 9, on recherche une paume de main 292 (figure 10) et des extrémités de doigts 293 (figure 11) qui définissent la configuration de main complète 294 (figure 12).

On gagne ainsi en efficacité en utilisant et croisant au moins deux « techniques » différentes.

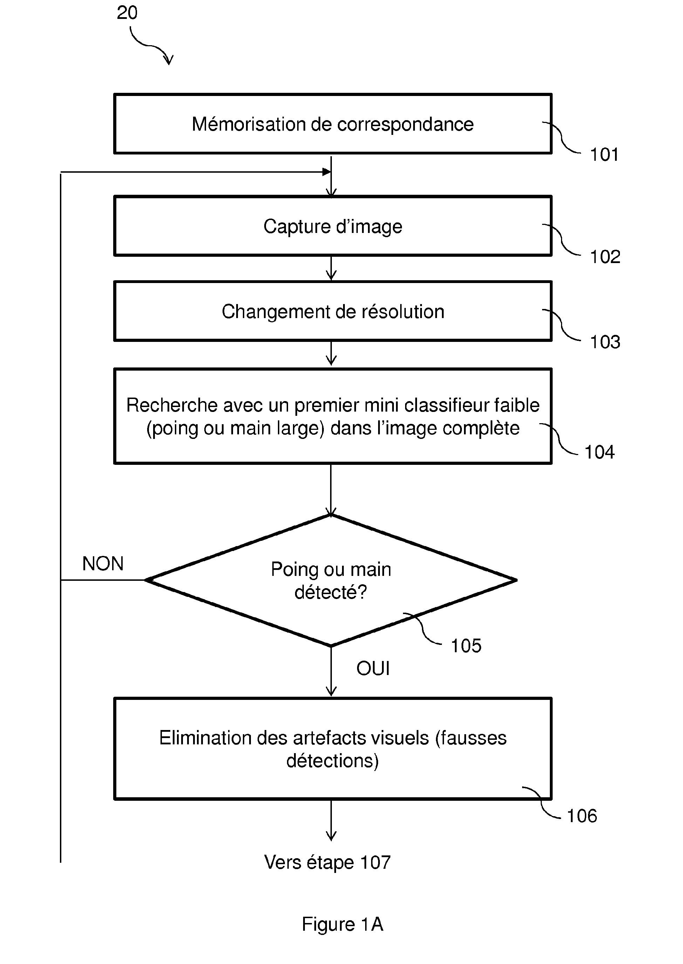

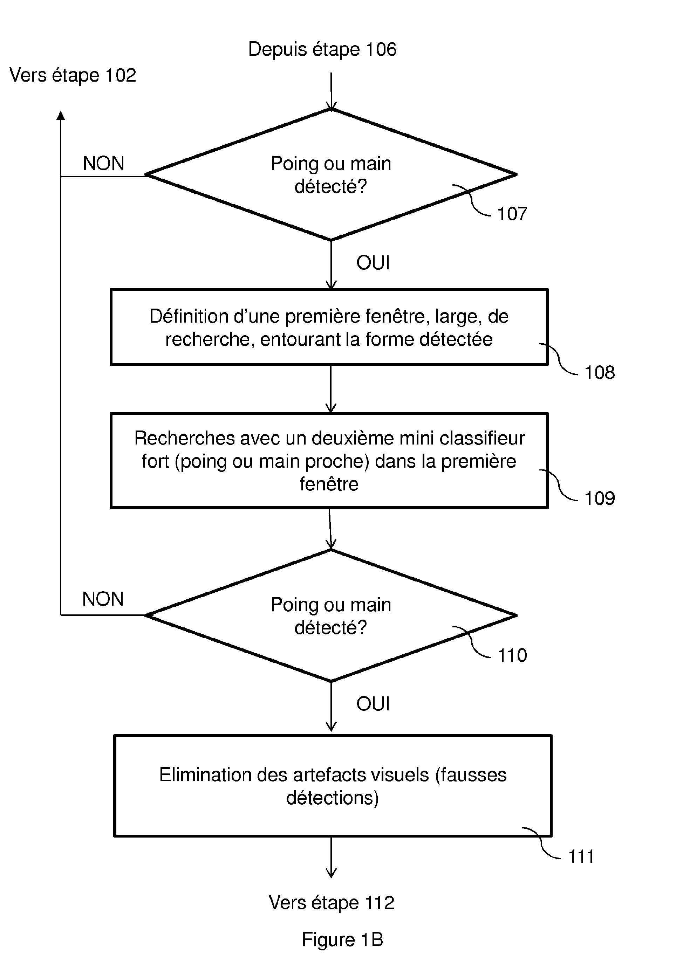

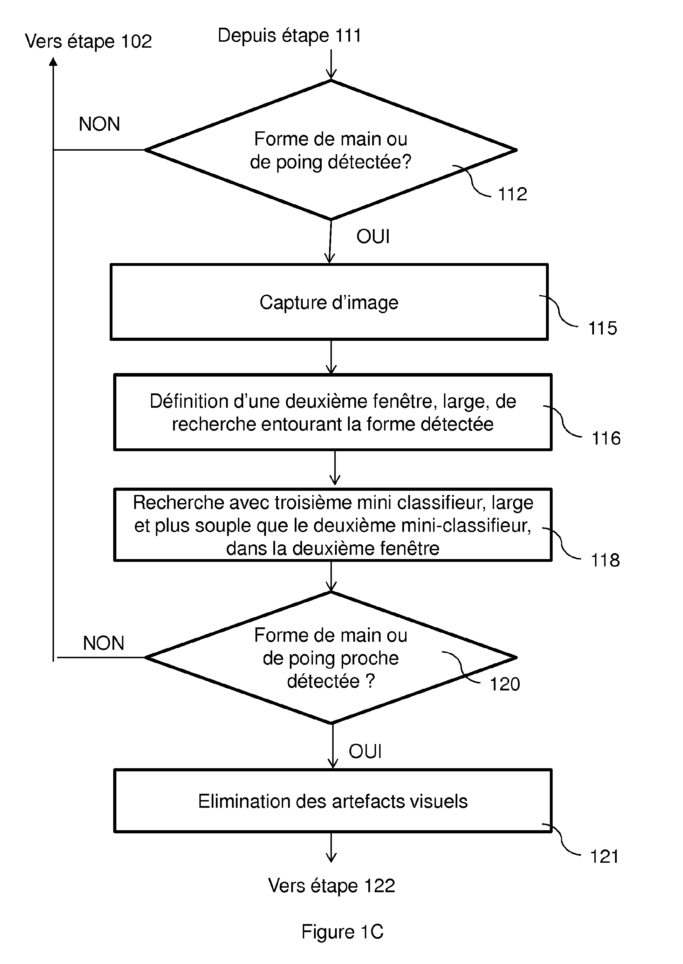

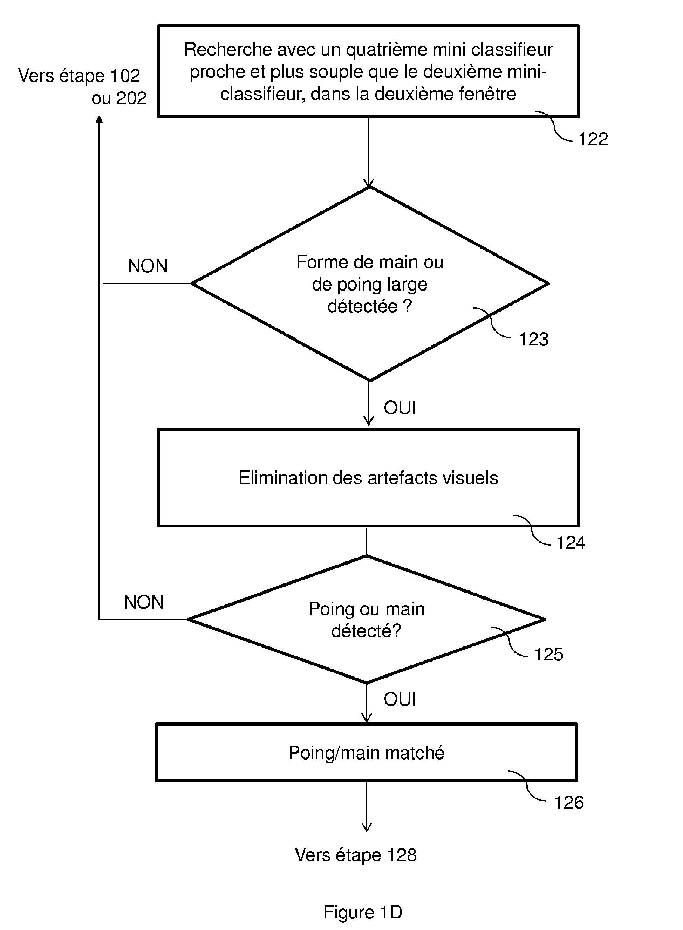

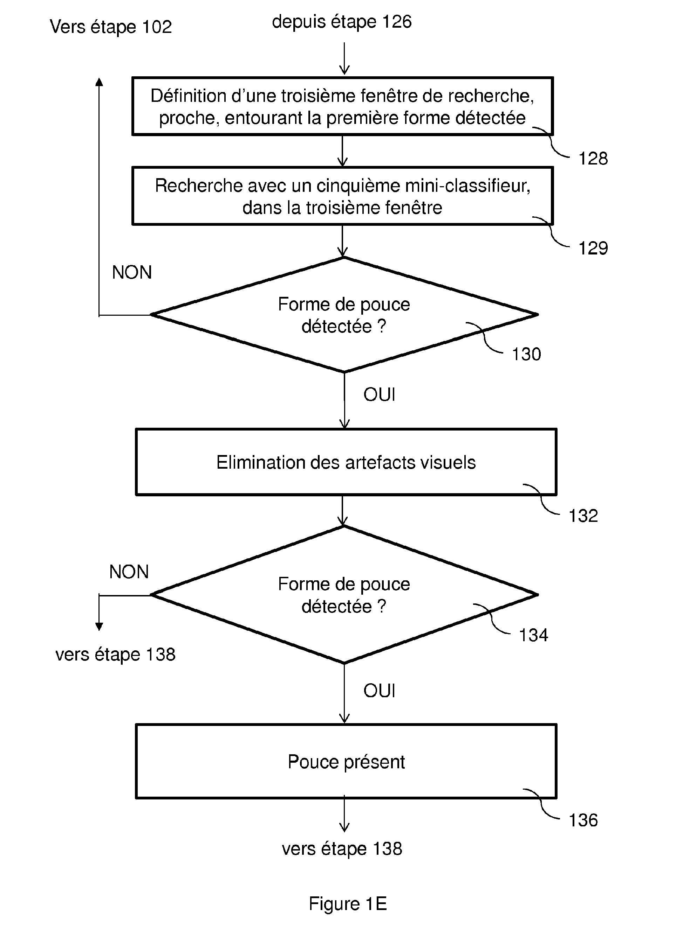

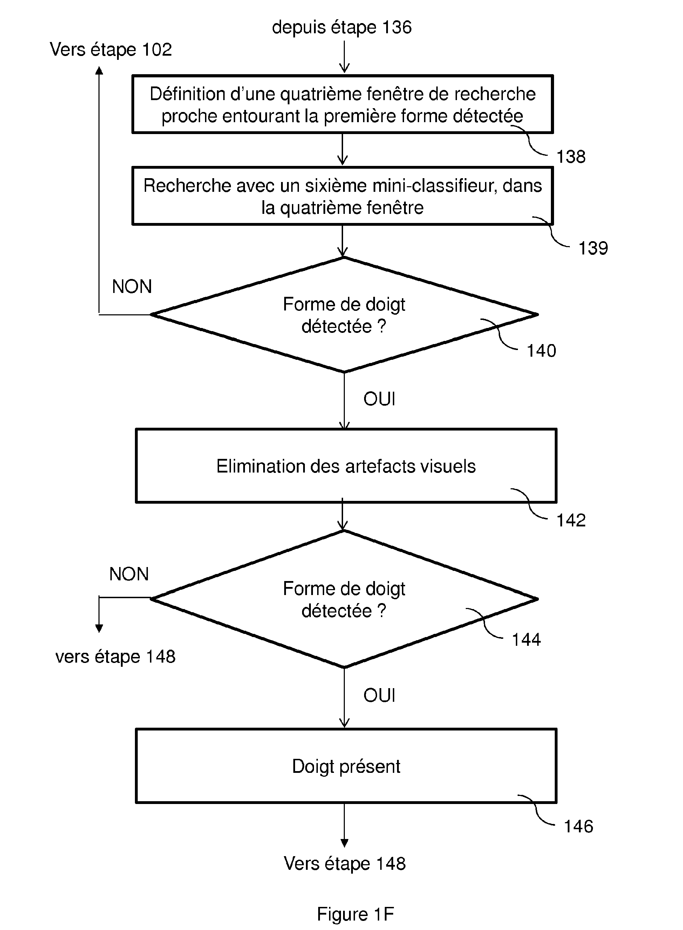

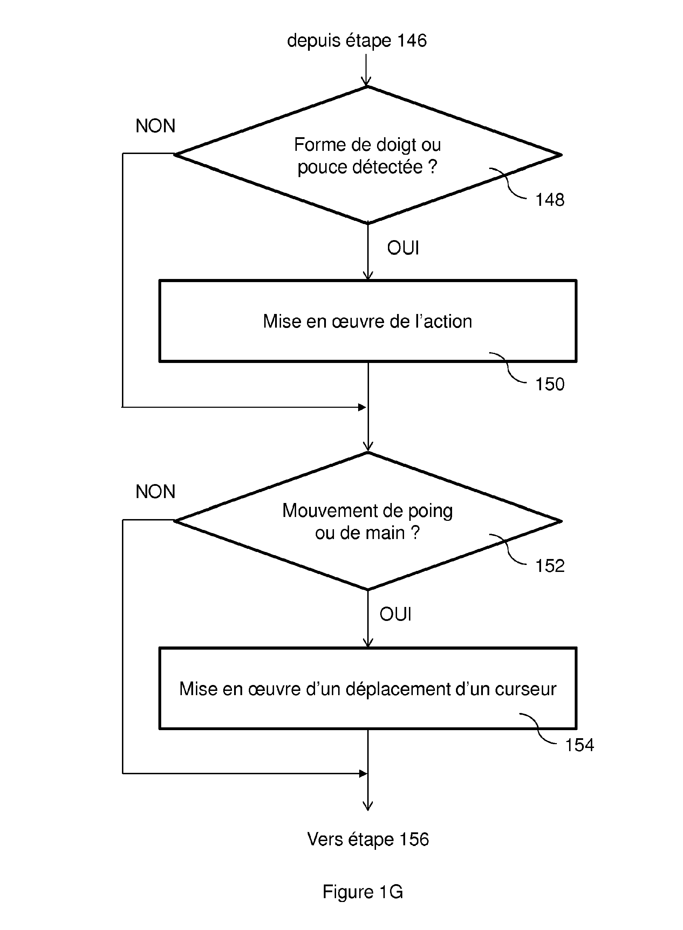

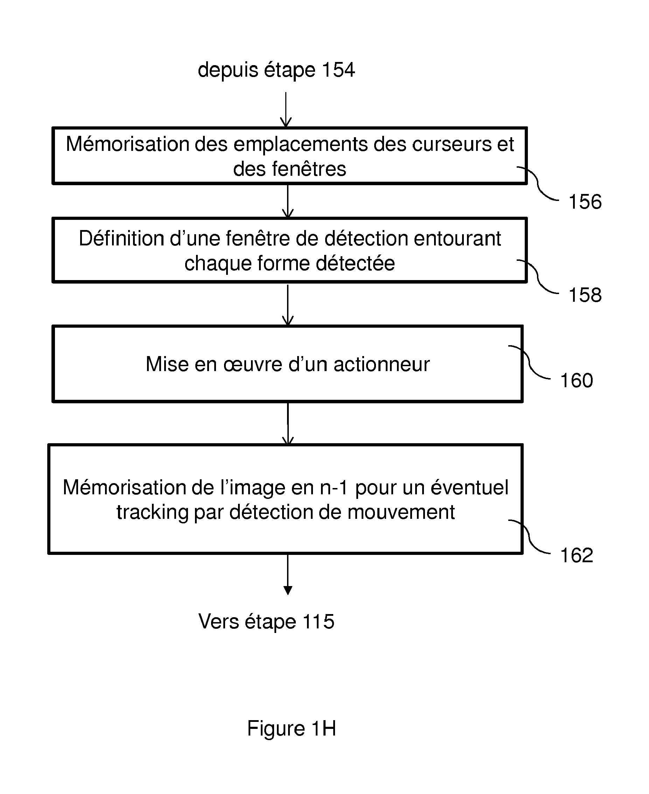

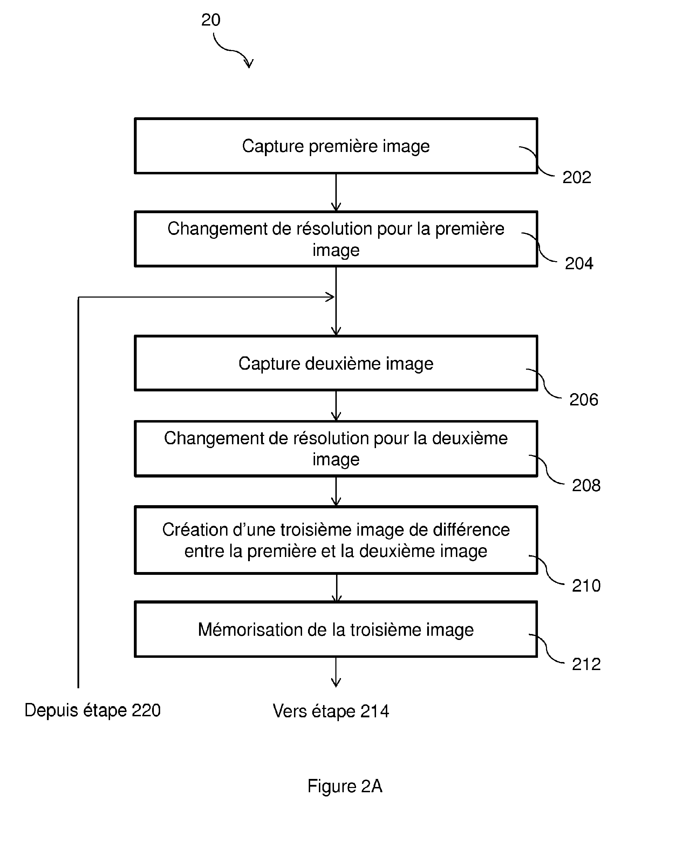

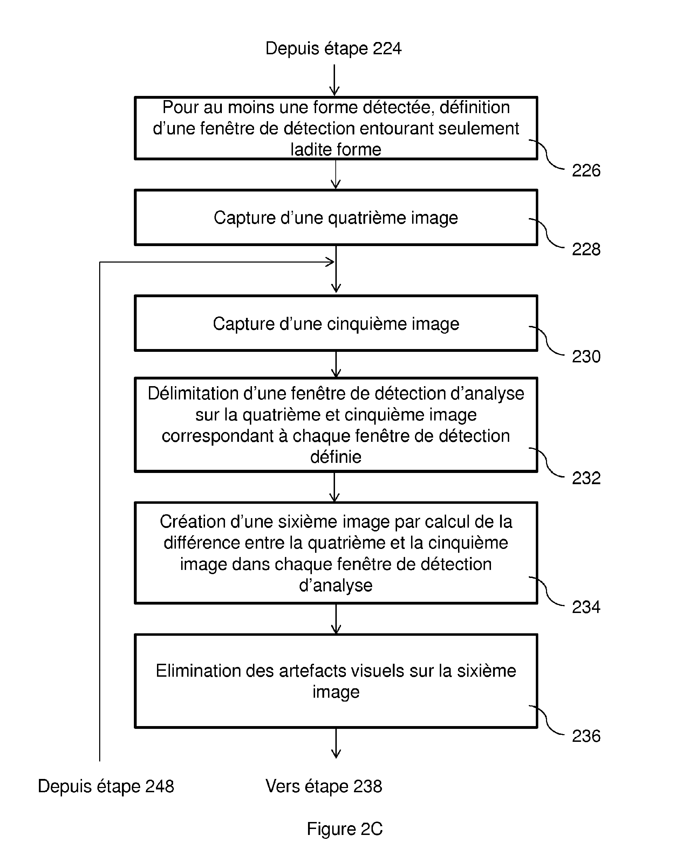

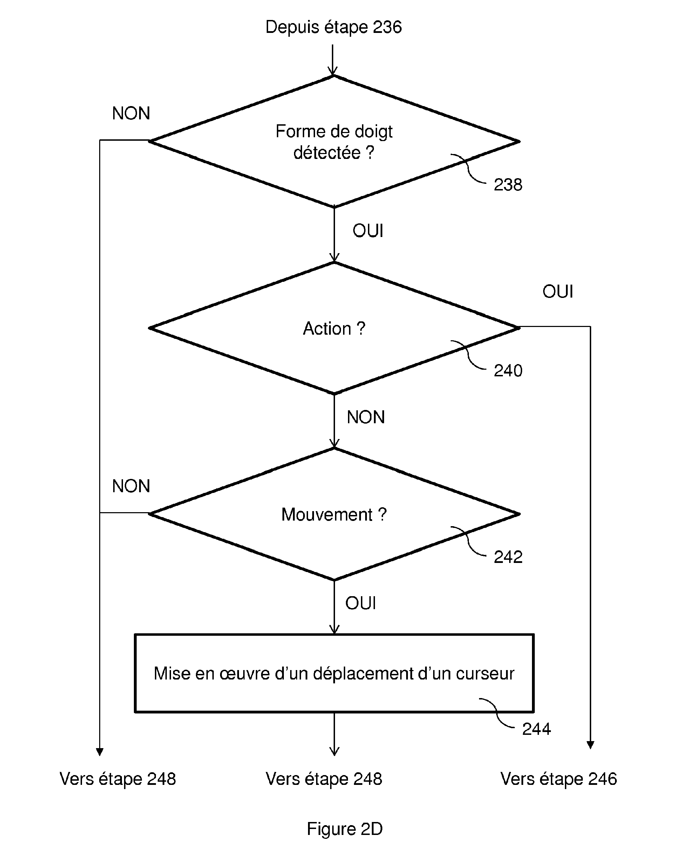

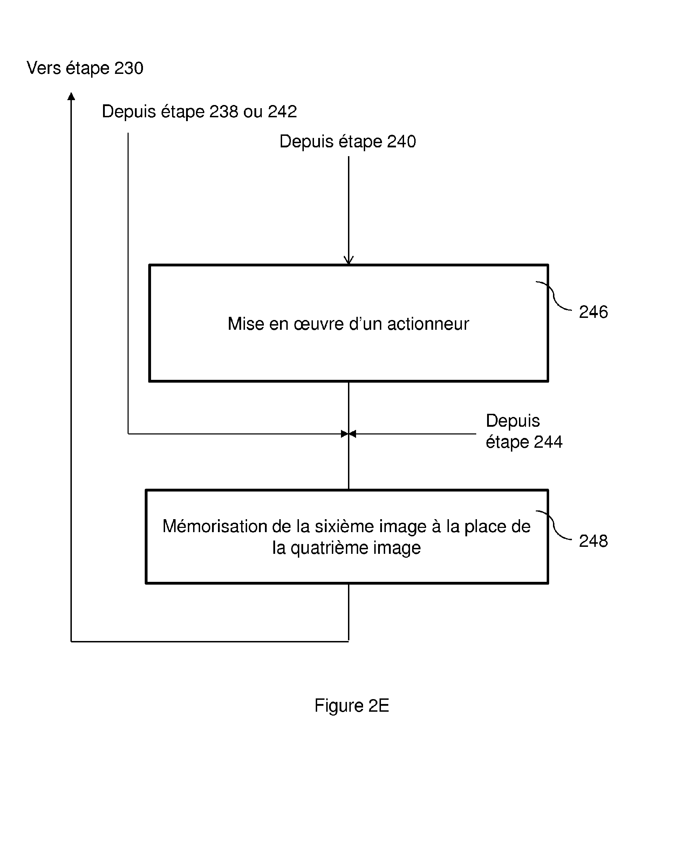

Par exemple, les deux techniques sont :
- la détection de formes par le mouvement (comme exposé en regard des figures 2A à 2E) et
- la détection de forme et/ou de mouvements par un système à classifieurs (par exemple les Haar, du nom du mathématicien, HOG, pour histogramme de gradient orienté, LBP, pour Motif binaire local, etc...) (comme exposé en regard des figures 1A à 1H).

Cependant, contrairement aux algorithmes utilisant des classifieurs « simples », le procédé objet de la présente invention utilise des « mini » classifieurs. Créer des « minis» classifieurs permet de diminuer la taille des fichiers (type XML par exemple) donc réduire le temps de calcul et permet également une diminution du nombre d'erreurs. Un même objet sera « cartographié » de différentes manières par les différents mini-classifieurs.

On note que les mini-classifieurs utilisés ne sont pas limités aux formes de poings, d'une main ou de doigts d'une main mais s'étendent à des formes plus complexes.

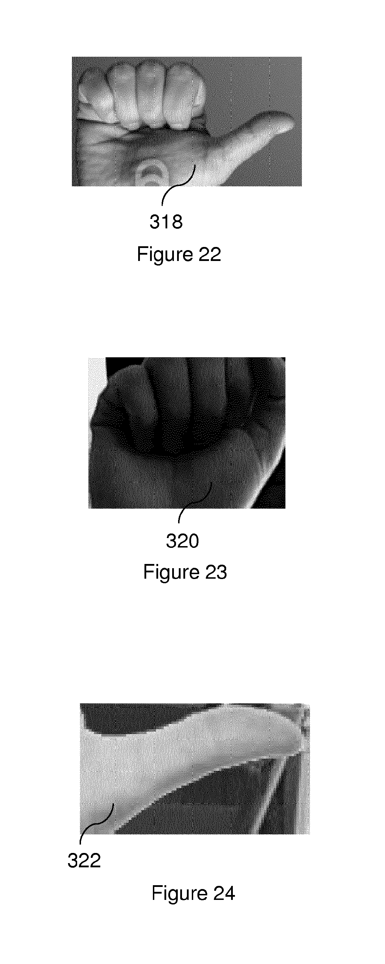

La figure 22 décrit un exemple dans lequel on souhaite détecter une main fermée 318, avec le pouce ouvert. Pour ce faire, nous avons deux solutions :
1. Décomposer en deux « mini » classifieurs, détectant deux parties, respectivement illustrées en figures 23 (classifieur de détection du poing seul 320) et 24 (classifieur de détection du pouce seul 322). Si les deux éléments recherchés sont reconnus dans la même zone, alors la détection est validée.
2. Créer deux mini-classifieurs dont l'un détecte l'objet entier à détecter, c'est-à-dire ici le poing et le pouce et l'autre le pouce seul. Si les deux éléments recherchés sont reconnus dans la même zone, alors la détection est validée.

Donc, pour chaque image, l'algorithme principal utilise :
- soit au moins deux « mini » classifieurs,
- soit, au moins un « mini » classifieur et au moins un algorithme de mouvement.
L'assemblage de ces deux types d'algorithme permet de s'affranchir des inconvénients des mini-classifieurs.

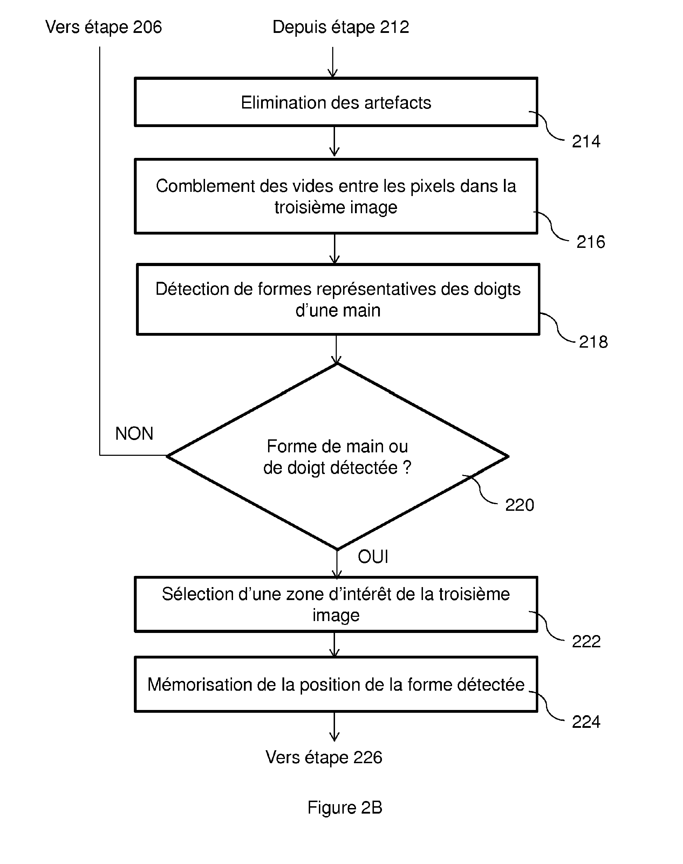

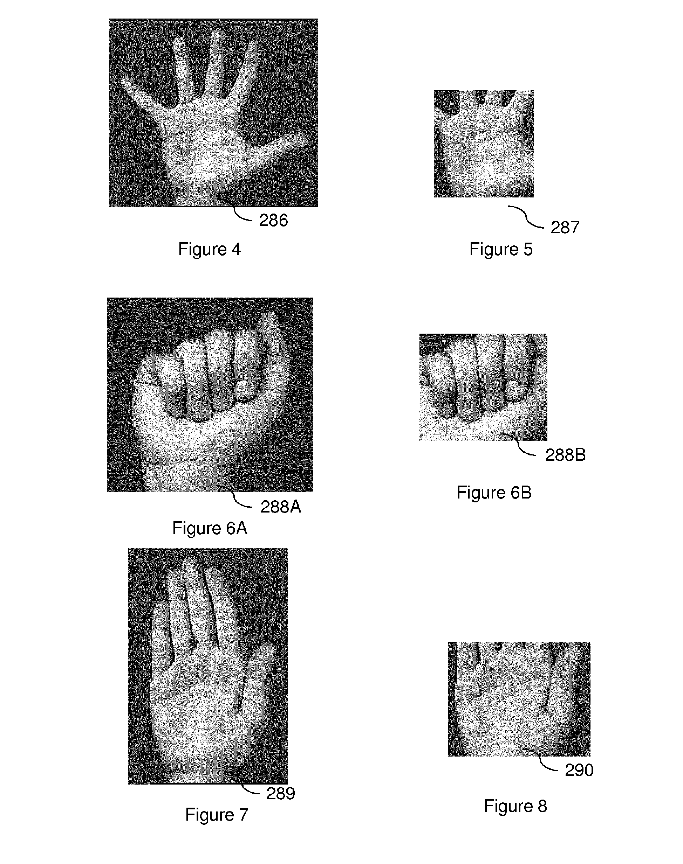

On observe, sur les figures 1 A à 1 E, des étapes d'un mode de réalisation du procédé 10 objet de la présente invention. Ce procédé 10 comporte :
- une étape 101 de mémorisation de correspondance entre des ensembles de formes détectées et des actions à réaliser par un système informatique et, éventuellement, entre des ensembles de formes détectées et des mouvements détectés avec des actions à réaliser,
- une étape 102 de capture d'une image,
- une étape 103 de création d'une valeur moyenne de pixels pour minimiser les artefacts lumineux dus aux variations du capteur. Pour cela, on change la résolution de l'image, par exemple en la divisant par deux dans chaque direction, chaque élément d'image (pixel) prenant la valeur moyenne de quatre éléments d'images de l'image captée ; l'étape 103 permet de réduire le nombre de fausses détections lors de l'étape suivante,
- une étape 104 de recherche de LBP faible, avec un premier mini-classifieur (en anglais « classifier »), dans l'image complète de faible résolution,
- une étape 105 de détermination si un poing ou une main a été détecté au cours de l'étape 104, si non on retourne à l'étape 102,
- si un poing ou une main a été détecté au cours de l'étape 104, on effectue une étape 106 d'élimination des artefacts visuels correspondant à des fausses détection (voir étape 214, figure 2B), Les éliminations d'artefacts se font de manière logique : par analyse de la taille par rapport à la taille précédente, et position par rapport à la valeur précédente,
- une étape 107 de détermination si un poing ou une main a été détectée, après élimination des fausses détections, si non on retourne à l'étape 102,
- si un poing ou une main a été détectée, une étape 108 de détermination d'une première fenêtre de recherche, large, entourant le poing ou la main détectée,
- une étape 109 de recherche de avec un deuxième mini-classifieurs, dans la première fenêtre de recherche ; Préférentiellement, le deuxième mini-classifieur recherche une partie de la forme de main ou de poings qui est recherchée par le premier mini-classifieur. Pour donner un exemple, on utilise, comme premier mini-classifier, une recherche du poing dans sa globalité (voir 288A, figure 6) et, comme deuxième mini-classifier, une recherche plus proche (par exemple correspondant à l'intérieur du poing, voir 288B, figure 6B)). Des exemples de formes 286 à 290 recherchées par les mini-classifieurs sont donnés en figures 4 à 8. L'étape 109 est répétée pour toutes les formes de poing ou de main déjà détectées, afin de valider ou d'invalider leur détection, si plusieurs formes ont été reconnues,
- une étape 110 de détermination si un poing ou une main a été détectée au cours de l'étape 109, si non, on retourne à l'étape 102,
- une étape 111 d'élimination des artefacts visuels correspondants à des fausses détections au cours de l'étape 109,
- une étape 112 de détermination si un poing ou une main a été détectée, après élimination des fausses détections, si non on retourne à l'étape 102,
- si un poing ou une main a été détectée, une étape 115, qui commence une phase de suivi (en anglais « tracking ») de la forme détectée, de capture d'une nouvelle image,
- une étape 116 de détermination d'une deuxième fenêtre de recherche, large, entourant le poing ou la main détectée,
- une étape 118 de recherche de avec un troisième mini-classifieurs, dans la deuxième fenêtre de recherche, les troisième et quatrième mini-classifieur ayant des paramètres plus « souples » de détection (Cela induit un traitement plus rapide mais augmente le nombre de fausses détections. Fausses détections déjà éliminées pour la plupart par le premier et le deuxième mini-classifieurs plus « robuste » et par la fenêtre de recherche plus petite), d'un poing ou d'une main large ;
- au cours de l'étape 120, on détermine si une forme de main ou de poing a été détecté au cours de l'étape 118 ; si non, on retourne à l'étape 102,
- si oui, au cours d'une étape 121, on procède à une élimination des artefacts visuels correspondant à des fausses détections (voir étape 214, figure 2B),
- au cours d'une étape 122, on effectue une recherche de LBP, avec un quatrième mini-classifieur, plus souple, d'un poing ou d'une main proche d'un poing ou d'une main déjà détectée, dans la deuxième fenêtre de recherche,
- au cours d'une étape 123, on détermine si une forme de main ou de poing proche est détectée, si non on retourne à l'étape 102,
- si oui, au cours d'une étape 124, on procède à une élimination des artefacts visuels correspondant aux fausses détections de l'étape 122,
- puis, au cours d'une étape 125, on détermine si une forme de main ou de poing proche est détectée après élimination des fausses détections, si non on retourne à l'étape 102 et
- si oui, au cours d'une étape 126, on considère qu'il y a correspondance (en anglais
   « matching ») de la main ou du poing suivie entre plusieurs images successives.

Préférentiellement les premier et deuxième mini-classifieurs mettent en oeuvre des bases de données de formes de mains et/ou de poings, comportant plus de formes de mains et/ou de poings que les bases de données de formes mises en oeuvre par les troisième et quatrième mini-classifieurs.

En variante de l'un ou l'autre des retours à l'étape 102, on passe à l'étape 202 (figure 2A) ; en effet, si on n'a pas trouvé de forme de poing ou de main, un passage à l'algorithme exposé en regard des figures 2A à 2E peut être efficace pour en détecter un.

Au cours d'une étape 128, débutant une phase de recherche de pouce, on définit une troisième fenêtre de recherche, proche, entourant la forme de poing ou de main précédemment détectée ; on utilise, à cet effet, des données de proportion des éléments de la main, par exemple les proportions 294 représentées en figure 14.
- Puis, au cours d'une étape 129, on effectue une recherche, avec un cinquième mini-classifieur, d'un pouce, dans la troisième fenêtre de recherche,
- au cours d'une étape 130, on détermine si une forme de pouce est détectée dans cette fenêtre de recherche proche, si non on retourne à l'étape 102,
- si oui, au cours d'une étape 132, on procède à une élimination des artefacts visuels,
- puis, au cours d'une étape 134, on détermine si une forme de pouce est détectée dans la fenêtre de recherche, proche ; si non, il y a une fausse détection et on passe à l'étape 138 sans considérer qu'un pouce à été détecté et
- au cours d'une étape 136, on considère qu'un pouce est représenté dans l'image, à proximité du poing ou de la main précédemment détectés.

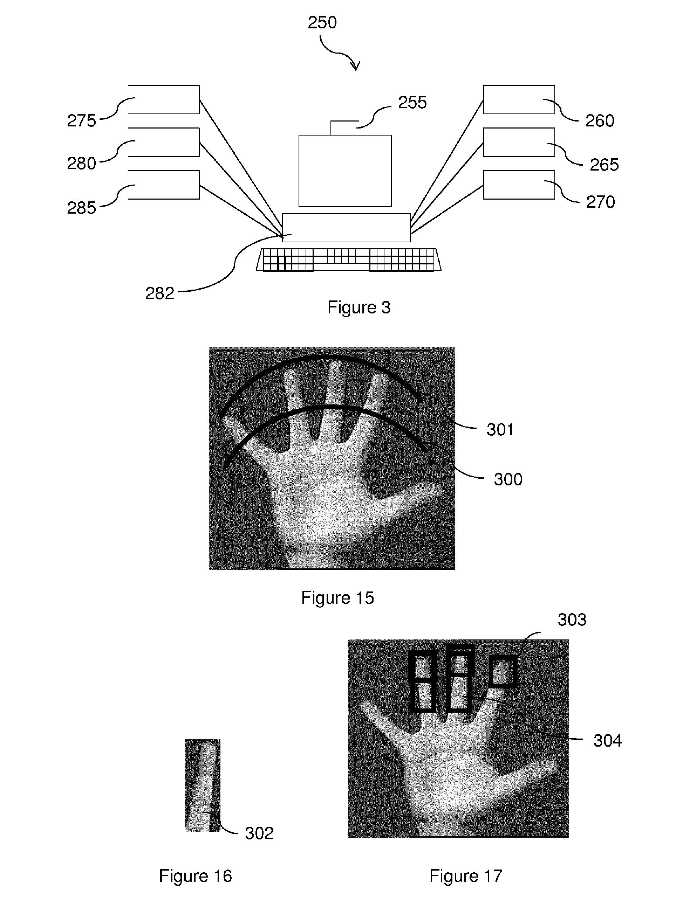

Au cours d'une étape 138, débutant une phase de recherche d'au moins un autre doigt que le pouce, on définit une quatrième fenêtre de recherche, proche entourant la forme de poing ou de main précédemment détectée ; on utilise, à cet effet, des données de proportion des éléments de la main, par exemple les proportions entre un point de la base d'une paume de main 296 et une dimension de cette paume 297 représentées en figure 13, la zone de recherche des extrémités de doigts autres que le pouce s'effectuant entre deux arcs de cercles 300 et 301 représentés en figure 15 et la forme d'un doigt entier 302 (figure 16) étant effectuée dans des fenêtres de recherche 304, entre la paume et les extrémités de doigts 303, comme illustré en figure 17.
- Puis, au cours d'une étape 139, on effectue une recherche, avec un sixième mini-classifieur, d'un autre doigt que le pouce, dans la quatrième fenêtre de recherche,
- au cours d'une étape 140, on détermine si au moins une forme de doigt est détectée dans cette fenêtre de recherche, proche, si non on retourne à l'étape 102,
- si oui, au cours d'une étape 142, on procède à une élimination des artefacts visuels,
- puis, au cours d'une étape 144, on détermine si au moins une forme de doigt est détectée dans la fenêtre de recherche, proche ; si non, il y a une fausse détection et on passe à l'étape 148 sans considérer qu'un autre doigt que le pouce à été détecté,
- au cours d'une étape 146, on considère qu'au moins un doigt est représenté dans l'image, à proximité du poing ou de la main précédemment détectés.

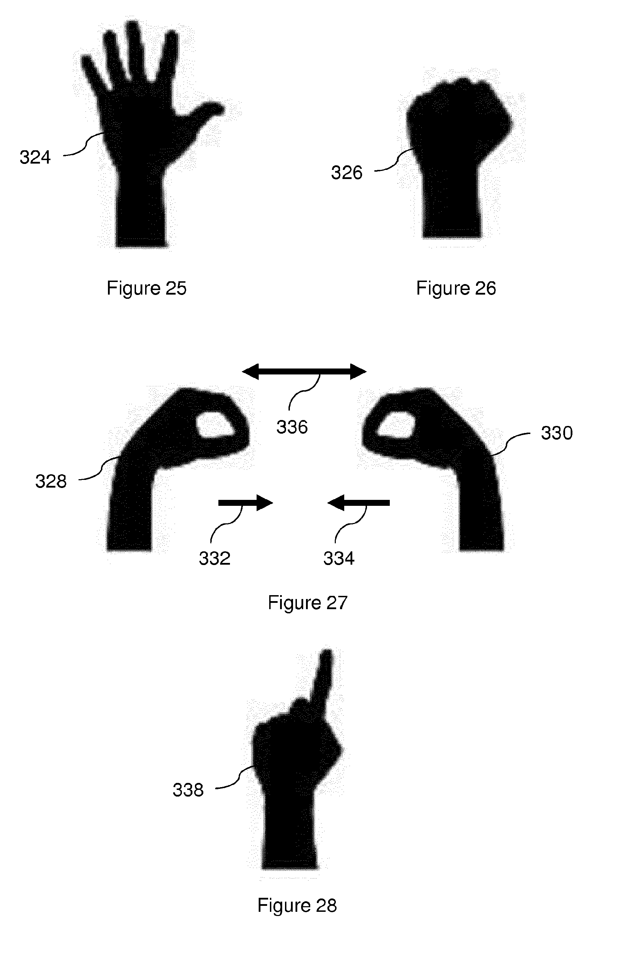

Au cours d'une étape 148, qui débute une phase d'interprétation des objets détectés dans l'image, on détermine si un ensemble de formes et, éventuellement, un mouvement correspond, en mémoire, à une action à réaliser. Par exemple, on détermine si une forme de pouce ou de doigt a été détectée et correspond à une action à réaliser (voir figures 25 à 30). Si oui, au cours d'une étape 150, on réalise l'action considérée.

Si le résultat de l'étape 148 est négatif ou à la suite de l'étape 150, au cours d'une étape 152, on détermine si un mouvement de poing ou de main a été détecté. Si oui, au cours d'une étape 154, on réalise un mouvement de curseur proportionnel au mouvement détecté.

Si le résultat de l'étape 152 est négatif ou à la suite de l'étape 154, au cours d'une étape 156, on met en mémoire les emplacements des curseurs et des fenêtres de recherche.

Au cours d'une étape 158, on définit une fenêtre de recherche entourant chaque forme détectée. Au cours d'une étape 160, on met en oeuvre un actionneur associé aux formes et mouvements détectés.

Enfin, au cours d'une étape 162, on effectue la mémorisation de l'image courant en mémoire précédente en vue du traitement d'une nouvelle image captée au cours d'une étapel 15, qui deviendra l'image courante pour un éventuel suivi de mouvement.

En variante, en cas de résultat négatif de l'étape 110, on passe à l'étape 202 (figure 2A), pour rechercher, sans mini-classifieur, une forme en mouvement qui soit reconnue comme une forme caractéristique d'un doigt ou d'une main.

En variante, la phase de suivi (étape 115 à 126), d'une part, et la phase de recherche de pouce (étapes 128 à 136) et d'autres doigts (étape 138 à 146), d'autre part, sont effectuées en parallèle. Dans ce cas la sortie de l'étape 112 mène à la fois à l'étape 115 et à l'étape 128 et l'étape 126 se poursuite par l'étape 148. L'étape 162 mène alors à l'étape 115 si le résultat de l'étape 125 est positif et à l'étape 102, si non.

On observe, sur les figures 2A à 2E, des étapes d'un mode de réalisation du procédé 20 objet de la présente invention. Ce procédé 20 comporte :
- une étape 202 de capture d'une première image,
- une étape 204 de changement de résolution pour la première image,
- une étape 206 de capture d'une deuxième image,
- une étape 208 de changement de résolution pour la deuxième image,
- une étape 210 de création d'une troisième image par calcul de la différence entre la première et la deuxième image,
- une étape 212 de mémorisation de la troisième image
- une étape 214 d'élimination des artefacts visuels de la troisième image,
- une étape 216 de comblement des vides entre les pixels dans la troisième image,
- une étape 218 de détection de formes représentatives des doigts d'une main dans la troisième image,
- une étape 220 de vérification de la position relative de chaque forme de doigt détectée de manière à vérifier que l'ensemble formé par la pluralité de forme correspond à une main humaine,
- une étape 248 de sélection d'une zone d'intérêt de la troisième image,
- une étape 222 de mémorisation de la position de la forme détectée dans la troisième image,
- une étape 224 de définition, pour au moins une forme détectée, d'une fenêtre de détection de forme entourant ladite forme détectée,
- une étape 226 de capture d'une quatrième image,
- une étape 228 de capture d'une cinquième image,
- une étape 230 de délimitation, pour chaque fenêtre de détection définie, d'une fenêtre de détection sur la quatrième et cinquième image correspondant audit fenêtre de détection définie,
- une étape 232 de création d'une sixième image par calcul de la différence entre la quatrième et la cinquième image, dans chaque fenêtre de détection,
- une étape 234 d'élimination des artefacts visuels sur la sixième image,
- une étape 236 de détection, dans chaque fenêtre de détection, d'une forme représentative d'un doigt d'une main dans la sixième image,
- une étape 238 de détermination d'une action réalisée par la forme détectée dans chaque fenêtre de détection,
- une étape 240 de détermination d'un mouvement réalisé par la forme détectée dans chaque fenêtre de détection,
- une étape 242 de mise en oeuvre d'un déplacement du curseur lorsqu'un mouvement a été déterminé,
- une étape 244 de mise en oeuvre d'un actionneur lorsqu'une action a été déterminée et
- une étape 246 de mémorisation de la sixième image à la place de la quatrième image.

L'étape 202 de capture d'une première image est réalisée, par exemple, par la mise en oeuvre d'une cybercaméra (plus connue sous le nom de « webcam » et ci-après appelée ainsi) ou d'une caméra capable de capter des images en trois dimensions, telle que la caméra décrite dans la demande de brevet FR 12 56885. De plus, ce moyen de capture capte, par exemple, une image dans le domaine visible, infrarouge ou thermique.

L'étape 204 de changement de résolution pour la première image est réalisée, par exemple, par la mise en oeuvre d'un logiciel de compression d'image.

L'étape 206 de capture d'une deuxième image est réalisée, par exemple, par la mise en oeuvre de la webcam utilisée au cours de l'étape 202 de capture. Préférentiellement, le moyen de capture servant à réaliser les étapes 202 et 206 de capture est immobile entre la capture d'image réalisée au cours de l'étape 202 et la capture d'image réalisée au cours de l'étape 206.

L'étape 208 de changement de résolution pour la première image est réalisée, par exemple, par la mise en oeuvre d'un logiciel de compression d'image. Préférentiellement, les résolutions de la première et de la deuxième image sont identiques.

L'étape 210 de création d'une troisième image par calcul de la différence entre la première et la deuxième image est réalisée, par exemple, par un logiciel de traitement d'image. Ce logiciel réalise une différence point par point entre la première et la deuxième image de sorte que, à la fin du traitement, la troisième image ne comporte qu'une trace des éléments graphique ayant changés entre la première et la deuxième image. Préférentiellement, la première et la deuxième image ont été capturées par le même moyen de capture à moins d'un dixième de seconde d'intervalle. Ainsi, peu d'éléments capturés dans la première image ont bougé à l'instant de capture de la deuxième image.

L'étape 212 de mémorisation de la troisième image est réalisée, par exemple, par la mise en oeuvre d'une mémoire vive d'un ordinateur connecté au moyen de capture d'image mis en oeuvre dans les étapes 202 et 206 de capture d'image.

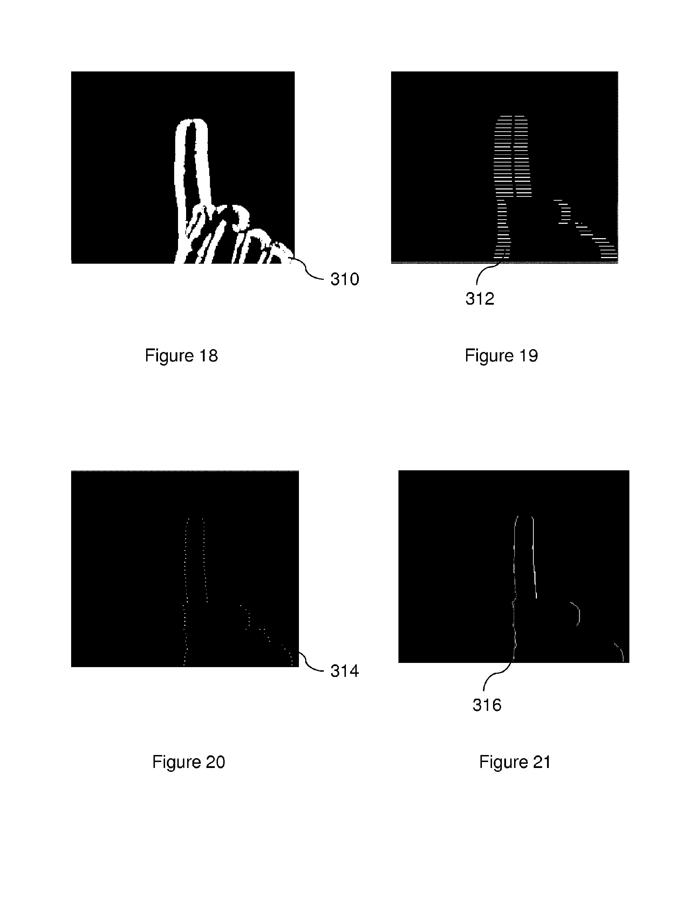

L'étape 214 d'élimination des artefacts visuels de la troisième image est réalisée, par exemple, par la mise en oeuvre d'un logiciel de traitement d'image. Ce logiciel de traitement d'image élimine les points de la troisième image résultant du bruit graphique de la deuxième image. Un exemple du résultat d'une telle étape 214 d'élimination est visible en figure 18.

L'étape 216 de comblement des vides entre les pixels dans la troisième image est réalisée, par exemple, par un logiciel de traitement d'image. Ce logiciel projette, par exemple, cinq lignes sur une seule ligne, et ce par intervalle de cinq lignes de la troisième image, comme visible en figure 19. De plus, ce logiciel détermine ensuite le point central de chaque segment restant sur les lignes non effacées, comme visible en figure 20. Puis, les points restants sont reliés entre eux pour former une forme, par exemple celle d'un doigt comme visible en figure 21.

L'étape 218 de détection de formes représentatives des doigts d'une main est réalisée, par exemple, par la mise en oeuvre d'un logiciel de traitement d'image. Ce logiciel détermine un nombre et la position de points d'inflexion de la forme de la troisième image, ainsi que des rapports largeur / hauteur, par exemple, et compare ce nombre et cette position de points d'inflexion et ces rapports avec des données caractéristiques de doigts d'une main. Ce logiciel est ainsi capable d'établir si la forme observée correspond à l'index, le majeur ou l'annulaire, par exemple, ou à deux ou trois de ces doigts.

Dans des variantes, l'étape 218 de détection détecte des formes représentatives des doigts de deux mains. Dans ces variantes, la suite du procédé 20 s'applique à chaque main détectée séparément. Dans ces variantes, les actions déterminées au cours de l'étape 238 de détermination d'une action et les mouvements déterminés au cours de l'étape 240 de détermination d'un mouvement sont déterminés en fonction des actions et mouvements déterminés sur chaque main séparément et mis en relation pour déterminer un mouvement ou une action.

L'étape 220 de vérification de la position relative de chaque forme de doigt détectée de manière à vérifier que l'ensemble formé par la pluralité de forme correspond à une main humaine est réalisée, par exemple, par un logiciel de traitement d'image. Ce logiciel détermine si les rapports et les distances entre les différentes formes de doigt détectées sont similaires à des rapports et distances type en mémoire. Si ces rapports et distances permettent de déterminer que la forme détectée ne correspond pas à une main humaine, le procédé 20 est réinitialisé à partir de l'étape 202 de capture.

Au contraire, si les rapports et distances mesurés permettent d'établir que la forme correspond bien à une main humaine, le procédé 20 comporte une étape 248 de sélection d'une zone d'intérêt de la troisième image réalisée, par exemple, par un logiciel de traitement d'image. Ce logiciel analyse la troisième image résultant de la différence entre la première et la deuxième image pour déterminer la partie de cette image où a eu lieu le plus de mouvements entre la première et la deuxième image. Ce logiciel sélectionne cette zone comme zone d'intérêt en délimitant un rectangle qui comporte la majeure partie des points où la différence entre la première et la deuxième image est non nulle.

L'étape 222 de mémorisation de la position de la forme détectée est réalisée, par exemple, par la mise en oeuvre d'une mémoire vive présente dans un ordinateur ou un téléviseur.

L'étape 224 de définition, pour au moins une forme détectée, d'une fenêtre de détection entourant ladite forme détectée est réalisée, par exemple, par un logiciel de traitement d'image. Tout d'abord, ce logiciel détermine quels doigts doivent être suivis. Par exemple, pour certaines interfaces, seul l'index est suivi, pour correspondre au mouvement à un doigt sur une interface tactile. Dans d'autres interfaces, deux doigts doivent être suivis, par exemple pour correspondre aux deux boutons d'une souris ou à des mouvements à deux doigts d'une interface tactile.

Pour chaque doigt qui doit être suivi, le logiciel détermine une fenêtre de détection autour de la forme du doigt, excluant au moins partiellement chaque autre forme détectée. De cette manière, les ressources nécessaires pour détecter ultérieurement un mouvement de la forme dans l'image sont restreintes en raison de la seule détection dans la fenêtre de détection définie autour de la forme du doigt. De plus, on évite un risque de confusion entre deux doigts.

L'étape 226 de capture d'une quatrième image est réalisée, par exemple, par le même moyen de capture que celui utilisé au cours de l'étape 202 de capture d'une première image.

L'étape 228 de capture d'une cinquième image est réalisée, par exemple, par le même moyen de capture que celui utilisé au cours de l'étape 202 de capture d'une première image.

L'étape 230 de délimitation d'une fenêtre de détection sur la quatrième et cinquième image correspondant à chaque fenêtre de détection définie est réalisée, par exemple, par la mise en oeuvre d'un logiciel de traitement d'image. Ce logiciel de traitement d'image applique sur la quatrième et la cinquième image chaque fenêtre de détection définie au cours de l'étape 224.

L'étape 232 de création d'une sixième image par calcul de la différence entre la quatrième et la cinquième image est réalisée, par exemple, par un logiciel de traitement d'image. Ce logiciel réalise une différence point par point entre la quatrième et la cinquième image de sorte que, à la fin du traitement, la sixième image ne comporte qu'une trace des éléments graphique ayant bougé dans le champ de vue du moyen de capture d'image entre la quatrième et la cinquième image. De plus, ce calcul de différence n'est réalisé que dans les fenêtres de détection délimitées sur la quatrième et la cinquième image afin de limiter le temps de traitement nécessaire.

L'étape 234 d'élimination des artefacts visuels de la sixième image est réalisée, par exemple, par la mise en oeuvre d'un logiciel de traitement d'image. Ce logiciel de traitement d'image élimine les points de la sixième image résultant du bruit graphique de la cinquième image.

L'étape 236 de détection de formes représentatives des doigts d'une main dans la sixième image est réalisée, par exemple, par la mise en oeuvre d'un logiciel de traitement d'image. Ce logiciel cherche dans chacun des fenêtres de détection délimitées une forme correspondant à la forme détectée au cours de l'étape 218 de détection. Si aucune forme n'est détectée, le procédé 20 continue par l'étape 246 de mémorisation.

Si une forme est détectée, le procédé 20 continue par l'étape 238 de détermination d'une action réalisée par la forme détectée réalisée, par exemple, par un logiciel analysant les différences de position entre chaque forme détectée sur la troisième image et chaque forme détectée sur la sixième image. Selon les combinaisons de différences déterminées, le logiciel peut conclure à la réalisation d'une action correspondant à une combinaison de différences prédéterminée. Ces différences peuvent, par exemple, prendre en compte une vitesse de mouvement d'un point d'une forme détectée sur la troisième image et la quatrième image ou de la réalisation par la forme d'un angle particulier et ainsi traduire des actions différentes selon les différences de vitesse et/ou d'angle détectées. Si une telle action est déterminée, le procédé 20 continue par l'étape 244 de mise en oeuvre d'un actionneur.

Dans le cas contraire, le procédé 20 continue par l'étape 240 de détermination d'un mouvement réalisé par la forme détectée réalisée, par exemple, par un logiciel analysant les différences de position entre chaque forme détectée sur la troisième image et chaque forme détectée sur la sixième image. Un mouvement selon trois dimensions est préférentiellement reconnu. Selon les combinaisons de différences déterminées, le logiciel peut conclure à la réalisation d'un mouvement correspondant à une combinaison de différences prédéterminée. Si aucun mouvement n'est déterminé, le procédé 20 continue par l'étape 246 de mémorisation.

Si un mouvement est déterminé, le procédé 20 continue par l'étape 242 de mise en oeuvre d'un déplacement d'un curseur sur un écran réalisé, par exemple, par un contrôleur de l'écran.

Les données relatives à la détermination d'un mouvement ou d'une action sont mémorisées par un dispositif de mémorisation, comme par exemple une mémoire vive. Ces données sont utilisées au cours de l'étape 238 de détermination d'une action et de l'étape 240 de détermination d'un mouvement afin de s'assurer de la cohérence de l'action ou du mouvement détecté en fonction de l'ensemble des données ainsi mémorisées. De telles données peuvent comporter, par exemple, la vitesse entre deux positions d'une forme détectée sur la troisième et la sixième image ou un angle réalisé entre deux positions d'une forme détectée sur la troisième et la sixième image. De telles dispositions sont réalisées pour éviter de détecter un mouvement ou une action incohérents au regard des mouvements et actions déterminés dans le passé immédiat par le procédé 20.

L'étape 244 de mise en oeuvre d'un actionneur est réalisée, par exemple, par la mise en oeuvre d'un contrôleur contrôlant ledit actionneur.

L'étape 246 de mémorisation de la sixième image à la place de la quatrième image est réalisée, par exemple, par la mise en oeuvre d'une mémoire vive. Puis on retourne à l'étape 228.

En variante, au moins une des étapes d'élimination d'artéfact est retirée ainsi que l'étape de détection de forme, qui suit une étape d'élimination d'artéfact retirée du procédé.

On observe, sur la figure 3, un mode de réalisation particulier du dispositif 250 objet de la présente invention. Ce dispositif 250 de commande d'actions réalisées par un système informatique, par reconnaissance et de suivi d'au moins une main, comporte :
- un moyen 282 de mise en mémoire de correspondance entre des ensembles de formes de parties de main et des actions à commander,
- un moyen 255 de capture d'une image,
et des moyens de commande et de calcul 282 qui, itérativement :
- commandent une capture d'une image,
- recherchent un poing ou une main, avec un premier mini-classifieur (en anglais « classifier ») dans l'image complète,
- au cas où un poing ou une main est détecté, définissent une première fenêtre de recherche entourant le poing ou la main détecté et recherchent, avec un deuxième mini-classifieur, d'un poing ou d'une main dans la première fenêtre,
- au cas où un poing ou une main est détecté au cours de la recherche avec le deuxième mini-classifieur, réalisent une phase de suivi comportant :
   o une capture d'une nouvelle image,
   o une définition d'une deuxième fenêtre de recherche entourant le poing ou la main détecté,
   o une recherche, avec un troisième mini-classifieur, du poing ou de la main détecté dans la deuxième fenêtre de recherche, et
   o si le poing ou la main est détecté avec le troisième mini-classifieur, une recherche avec un quatrième mini-classifieur, du poing ou de la main détecté, dans la deuxième fenêtre de recherche,
- si un poing ou une main est détectée avec le deuxième mini-classifieur, réalisent :
   o une définition d'une fenêtre de recherche d'un pouce,
   o une recherche d'un pouce dans la fenêtre de recherche de pouce,
   o une définition d'une fenêtre de recherche d'au moins un doigt différent du pouce,
   o une recherche d'au moins un doigt différent d'un pouce dans la fenêtre de recherche de doigt différent d'un pouce et
déterminent si l'ensemble de formes détectées dans l'image correspond à une action à réaliser et, si l'ensemble de formes détectées dans l'image correspond à une action à réaliser, une étape de réalisation de ladite action.

Dans des modes de réalisation, dont celui illustré en figure 3, le dispositif objet de la présente invention comporte aussi :
- un moyen 260 de création d'une troisième image représentative de la différence entre la première image et la deuxième image captées par calcul de la différence entre la première image et la deuxième image,
- un moyen 265 de détection de formes représentatives d'une pluralité de doigts dans la troisième image créée,
- un moyen 270 de mémorisation de la position de chaque forme détectée dans l'image créée précédente,
- un moyen 260 de création d'une cinquième image représentative de la différence entre la deuxième image et la quatrième image (la troisième image captée) par calcul de la différence entre la deuxième image et la quatrième image,
- un moyen 275 de repérage de la forme d'au moins un doigt dans la cinquième image créée en fonction d'au moins une forme détectée par le moyen de détection de forme et de la position mémorisée de ladite forme dans l'image créée précédente,
- un moyen 280 de reconnaissance d'un mouvement associé à au moins une forme de doigt repérée et
- un moyen 285 de mise en oeuvre d'un actionneur en fonction du mouvement reconnu.

Les moyens 255 de capture sont, par exemple, confondus dans une webcam telle que décrite dans la demande de brevet FR 12 56885. Dans des variantes, ces moyens 255 de captures ne sont pas confondus. De plus, ce moyen 255 de capture capte, par exemple, une image dans le domaine visible, infrarouge ou thermique.

Les moyens 260 de création d'une image à partir de deux images capturées par le moyen 255 de capture sont, par exemple, un logiciel de traitement d'image et un microprocesseur. Ce logiciel de traitement d'image créé une image en faisant la différence, point par point, entre les deux images capturées.

Les moyens de commande et de mémorisation de correspondance sont, par exemple, un microprocesseur associé à une mémoire et à un logiciel comportant les instructions nécessaires à la mise en oeuvre des étapes du procédé objet de la présente invention.

Le moyen 265 de détection est, par exemple, un logiciel de traitement d'image. Ce logiciel compare le nombre et la position de points d'inflexion du tracé de la troisième image avec des nombres et des positions de points d'inflexion caractéristiques de doigts d'une main humaine. Lorsque le nombre et la position des points d'inflexions correspondent à ceux qui sont conservés en mémoire, le moyen 215 de détection détecte une forme représentative d'un doigt d'une main humaine.

Le moyen 270 de mémorisation est, par exemple, une mémoire vive.

Le moyen 275 de repérage est, par exemple, un logiciel de traitement d'image. Ce logiciel compare le tracé de la cinquième image avec chaque forme détectée par le moyen 260 de détection. Lorsque ce tracé est similaire à celui de chaque forme détectée, le moyen 275 de repérage conclue à la présence de chaque forme détectée dans la cinquième image.

Le moyen 280 de reconnaissance est, par exemple, un logiciel configuré pour calculer la différence de position d'un point caractéristique de chaque forme détectée entre la troisième et la cinquième image.

Le moyen 285 de mise en oeuvre d'un actionneur est, par exemple, un contrôleur contrôlant l'actionneur.

Les figures 18 à 21 représentent des résultats particuliers de l'étape de création, de l'étape d'élimination et de l'étape de comblement. En particulier, la figure 18 représente un résultat 302 particulier obtenu au cours de l'étape de création d'une image par différence entre deux images. Dans cette image, par exemple, on aperçoit une trace ressemblant grossièrement à la forme d'un poing serrée et d'un doigt tendu qui se serait déplacée latéralement entre les deux images capturées. Entre les deux images capturées, aucun autre élément graphique capturé dans les deux images ne s'est déplacé en dehors du doigt. Après l'étape de création de cette image, les artefacts visuels sont éliminés. Ces artefacts correspondent à un bruit graphique tel un nuage de points représentant une baisse soudaine de luminosité dans une partie du cadre de l'image capturée ou un mouvement du décor lié à un courant d'air, par exemple.

La figure 19 représente un échantillonnage vertical 304 de l'image illustré en figure 18. Afin de réaliser cet échantillonnage, on projette, par tranche de cinq lignes, cinq lignes sur une seule de manière à négliger toute erreur provenant du fait qu'une ligne est vide, en raison d'une baisse de luminosité par exemple. Une fois cet échantillonnage réalisé, on élimine de nouveau les artefacts visuels restants sur l'image obtenue. De tels artefacts étant identifiés uniquement sur les lignes échantillonnées.

La figure 20 représente une image 306 créée par la détermination du point central de chaque segment horizontal de la figure 19.

La figure 21 représente une image 308 représentative d'un doigt, image 308 créée en reliant les points en blanc les plus proches dans l'image illustrée en figure 20. Ainsi, la forme de représentative du contour d'un doigt est recréée, et sa simplicité permet un traitement plus rapide de reconnaissance de forme.

Ainsi, comme on le comprend à la lecture des descriptions des figures 18 à 21, les étapes illustrées en figures 2A à 2E déconstruisent puis reconstruisent les formes créées par le calcul de différence entre deux images de manière à créer une forme simple et minimaliste idéale pour le traitement d'image.

Bien que la description qui précède n'expose le fonctionnement du procédé et du dispositif objets de la présente invention pour la reconnaissance et le suivi que d'une seule main, la présente invention ne se limite pas à la reconnaissance d'une seule main, chaque main détectée selon les étapes exposées ci-dessus pouvant être suivi indépendamment, les étapes de recherche étant effectuées indépendamment pour reconnaître deux poings ou deux mains puis, pour chaque poing ou main détecté, pour reconnaître un pouce et/ou d'autres doigts, dans des fenêtres de recherche entourant ladite main et de suivi de mouvements dans une fenêtre entourant ladite main.

Préférentiellement, les dimensions de chaque fenêtre de recherche ne dépasse pas un rectangle de surface neuf fois (trois fois dans chaque direction) supérieure à la surface du rectangle exinscrit du poing initialement détecté, les deux rectangles ayant le même centre.

Bien que la description qui précède ne prévoit le cas du suivi d'un objet (poing, main, pouce ou autre doigt) qu'entre deux images successives, la présente invention ne se limite pas à ce cas. La présente invention s'étend aussi au cas où, lorsqu'un objet, qui avait été détectée dans l'une des N (nombre entier prédéfini supérieur ou égal à un) images précédemment captées, n'a pas, après cette image, été détecté de nouveau. Dans ce cas, les fenêtres de recherche sont préférentiellement d'autant plus étendues que le nombre d'image depuis la dernière détection est élevé.

Dans le cas de la recherche d'un poing détecté m images précédemment mais pas détecté de nouveau depuis, la dimension du rectangle définissant la fenêtre de recherche peut être de 1 + 2 m/N fois le rectangle exinscrit du poing détecté, de même centre.

Exemple d'utilisation des technologies :
1. Détection :
   Reconnaissance d'au moins deux caractéristiques (algorithmes) identiques ou croisés (figures 1 A à 1 H). Ces combinaisons permettent un traitement plus robuste et plus rapide. A la détection, l'algorithme de détection de mouvement (figures 2A à 2E) permet d'éliminer le décor et donc les fausses détections faites par le classifieur.
2. suivi (« Tracking ») :
   Dans l'action (tracking), l'algorithme de détection de mouvement permet de corréler les informations même si le classifieur « décroche » pendant quelques secondes, par exemple à cause de la mauvaise qualité de l'image captée par la caméra ou à cause du mouvement de l'utilisateur qui devient moins visible pour la caméra (rotation autour d'un axe vertical, par exemple).

Dans les variantes décrites ici, au cours de l'étape de mise en oeuvre d'un actionneur, 242 et 244, l'actionneur mis en oeuvre dépend, d'une part, du mouvement reconnu et, d'autre part, de la partie de la main reconnue.

On décrit, ci-dessous, des exemples de positions de doigts et de mains associés à des actions de commande d'un dispositif, par exemple un ordinateur.

Figure 25 : une main ouverte 324 provoque un démarrage d'une commande sélectionnée ;

Figure 26 : un poing fermé 326 provoque, selon les contextes, une action d'attraper ou de valider ;

Figure 27 : deux mains 328 et 330 symbolisant des jumelles optiques provoque, en s'éloignant selon la flèche 336, une augmentation de taille, ou grossissement, de l'objet affiché et, en se rapprochant selon les flèches 332 et 334, une réduction de taille de l'objet affiché ;

Figure 28 : un poing fermé 338 avec un index vertical provoque une action de pointer ;

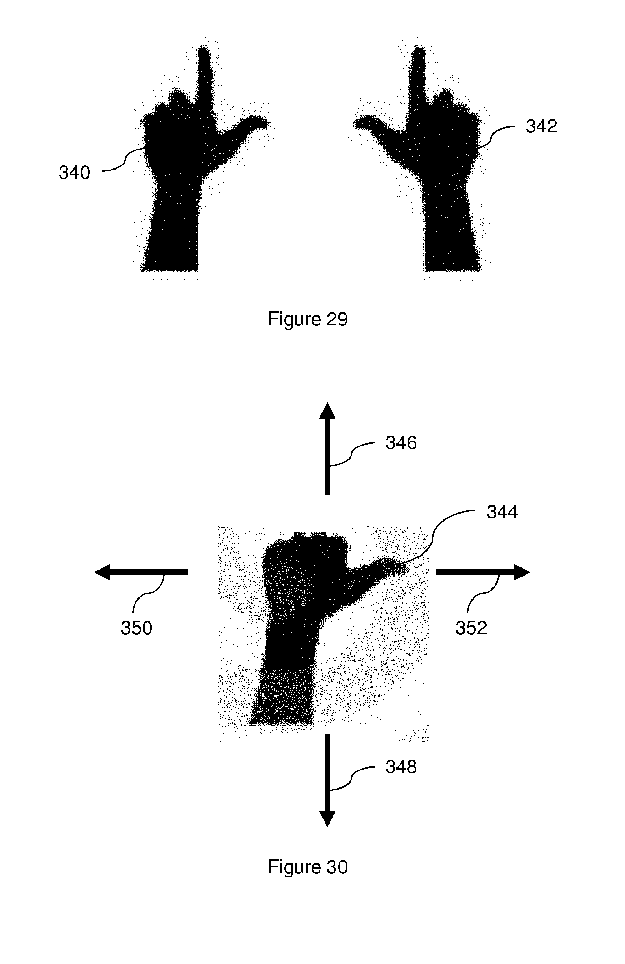

Figure 29 : deux poings 340 et 342 avec des pouces écartés se faisant face et des index verticaux provoquent la prise d'une photographie ;

Figure 30 : un poing fermé avec le pouce écarté 344 provoque, selon son déplacement : en déplacements verticaux selon les flèches 346 et 348, respectivement, une augmentation ou une réduction, de volume sonore ou de grossissement, selon le contexte, et en déplacements horizontaux selon les flèches 350 et 252, respectivement un recul ou une avance, par exemple dans une liste ou dans une succession de vues ou de diapositives.

Bien que la description qui précède concerne la détection et le suivi d'un ou plusieurs doigts d'une main, la présente invention ne se limite pas à ce type de forme mais s'étend, au contraire, à toutes les formes caractéristiques de parties du corps humain, notamment la tête ou l'ensemble du corps humain.

## Revendications

1. Procédé de commande d'actions réalisées par un système informatique, par reconnaissance et de suivi d'au moins une main, **caractérisé en ce qu'**il comporte :
- une étape (101) de mise en mémoire de correspondance entre des ensembles de formes de parties de main et des actions à commander,
et, itérativement :
- une étape (102) de capture d'une image,
- une étape (104) de recherche d'un poing ou d'une main, avec un premier mini-classifieur (en anglais « classifier ») dans l'image complète,
- au cas où un poing ou une main est détecté, une étape (108) de définition d'une première fenêtre de recherche entourant le poing ou la main détecté et une étape (109) de recherche, avec un deuxième mini-classifieur, d'un poing ou d'une main dans la première fenêtre,
- au cas où un poing ou une main est détecté au cours de l'étape de recherche avec le deuxième mini-classifieur, une phase de suivi comportant :
o une étape (115) de capture d'une nouvelle image,
o une étape (116) de définition d'une deuxième fenêtre de recherche entourant le poing ou la main détecté,
o une étape (117) de recherche, avec un troisième mini-classifieur, du poing ou de la main détecté dans la deuxième fenêtre de recherche, et
o si le poing ou la main est détecté avec le troisième mini-classifieur, une étape (122) de recherche avec un quatrième mini-classifieur, du poing ou de la main détecté, dans la deuxième fenêtre de recherche,
- si un poing ou une main est détectée avec le deuxième mini-classifieur :
o une étape (128) de définition d'une fenêtre de recherche d'un pouce,
o une étape (130, 132, 134) de recherche d'un pouce dans la fenêtre de recherche de pouce,
o une étape (138) de définition d'une fenêtre de recherche d'au moins un doigt différent du pouce,
o une étape (140, 142, 144, 146) de recherche d'au moins un doigt différent d'un pouce dans la fenêtre de recherche de doigt différent d'un pouce,
- une étape (148) de détermination si l'ensemble de formes détectées dans l'image correspond à une action à réaliser et, si l'ensemble de formes détectées dans l'image correspond à une action à réaliser, une étape (150) de réalisation de ladite action.

2. Procédé selon la revendication 1, dans lequel les premier et deuxième mini-classifieurs mettent en oeuvre des bases de données de formes de mains et/ou de poings, comportant plus de formes de mains et/ou de poings que les bases de données de formes mises en oeuvre par les troisième et quatrième mini-classifieurs.

3. Procédé selon l'une des revendications 1 ou 2, dans lequel le deuxième mini-classifieur recherche une partie de la forme qui est recherchée par le premier mini-classifieur.

4. Procédé selon l'une des revendications 1 à 3, dans lequel, si l'ensemble de formes détectées dans l'image ne correspond pas à une action à réaliser, et si un mouvement de main ou de poing a été réalisé entre la précédente image où un poing ou une main a été détecté ou suivi et l'image courante, une étape (154) de réalisation d'un mouvement de curseur proportionnel au mouvement détecté.

5. Procédé selon l'une des revendications 1 à 4, qui comporte, si, ni un poing, ni une main n'est détectée avec un des premier à quatrième mini-classifieur :
- une étape (206) de capture d'une deuxième image,
- une étape (210) de création d'une troisième image représentative de la différence entre la première image et la deuxième image par calcul de la différence entre la première image et la deuxième image,
- une étape (218) de détection de formes représentatives d'une pluralité de doigts dans la troisième image créée,
et, itérativement :
- une étape (222) de mémorisation de la position de chaque forme détectée dans l'image créée précédente,
- une étape (226) de capture d'une quatrième image,
- une étape (232) de création d'une cinquième image représentative de la différence entre la deuxième image et la quatrième image par calcul de la différence entre la deuxième image et la quatrième image,
- une étape (236) de repérage de la forme d'au moins un doigt dans la cinquième image créée en fonction d'au moins une forme détectée au cours de l'étape de détection de forme et de la position mémorisée de ladite forme dans l'image créée précédente,
- une étape (238, 240) de reconnaissance d'un mouvement associé à au moins une forme de doigt repérée,
- une étape de reconnaissance de la forme d'une partie d'une main et
- une étape (242, 244) de mise en oeuvre d'un actionneur en fonction du mouvement reconnu et de la partie de la main reconnue.

6. Procédé selon la revendication 5, qui comporte, après l'étape de détection d'une pluralité de formes de doigt, une étape (220) de vérification de la correspondance entre les positions relatives des formes de doigt détectées et une main humaine.

7. Procédé selon l'une des revendications 5 ou 6, dans lequel l'étape (210) de création d'une troisième image et/ou l'étape (232) de création d'une cinquième image comporte :
- une étape d'échantillonnage, dans des intervalles comportant, chacun, un nombre de lignes prédéterminé, par projection du contenu d'une pluralité de lignes de l'intervalle sur l'une des lignes dudit intervalle, pour constituer un segment horizontal,
- une étape de sélection du point central de chaque segment horizontal et
- une étape (216) de création de segments reliant le point central successif.

8. Procédé selon l'une des revendications 3 à 7, qui comporte, après l'étape de détection de forme, une étape (248) de sélection d'une zone d'intérêt de la troisième image de manière à sélectionner, pour chaque forme détectée dans la troisième image, une partie de la cinquième image autour de ladite forme.

9. Procédé selon l'une des revendications 3 à 8, dans lequel au cours de l'étape de reconnaissance d'un mouvement, un mouvement selon trois dimensions est reconnu.

10. Procédé selon l'une des revendications 3 à 9, dans lequel au cours de l'étape de repérage, on repère au moins la position de la forme de l'index d'une main.

11. Procédé selon la revendication 10, dans lequel, au cours de l'étape de détection de formes représentatives d'une pluralité de doigts dans la troisième image créée, on détecte au moins les formes d'un index, d'un majeur et d'un annulaire d'une même main.

12. Procédé selon l'une des revendications 1 à 11, dans lequel, au cours de l'étape (101) de mise en mémoire de correspondance entre des ensembles de formes de parties de main et des actions à commander, on met en mémoire au moins une correspondance entre un ensemble de formes de parties de main et un mouvement à une action à réaliser et, au cours de l'étape (148) de détermination si l'ensemble de formes détectées dans l'image correspond à une action à réaliser, on détermine si un mouvement détecté entre deux images captée correspond à un mouvement associé à l'ensemble de parties de main et à une action à réaliser.

13. Procédé selon la revendication 12, dans lequel l'ouverture d'une main correspond au démarrage d'une commande sélectionnée.

14. Procédé selon l'une des revendications 12 ou 13, dans lequel l'éloignement latéral de mains vues de côté dans lesquelles le pouce rejoint les autres doigts correspond à une augmentation de taille, ou grossissement, de l'objet affiché et leur rapprochement correspond à une réduction de taille de l'objet affiché.

15. Procédé selon l'une des revendications 12 à 14, dans lequel un poing fermé avec le pouce écarté correspond, selon son déplacement :
- à une augmentation ou une réduction, de volume sonore ou de grossissement ou
- à un recul ou une avance, dans une succession de fichiers ou parties de fichiers.
